# EUROPEAN PATENT APPLICATION

(11) **EP 3 936 511 A1**
(43) Date of publication of application: **12.01.2022**
(21) Application number: 20305787.2
(22) Date of filing: 08.07.2020
(51) Int. Cl.: C07F 15/00, B01J 31/22

(54) **RUTHENIUM COMPLEXES, THEIR OPTICALLY PURE ENANTIOMERS AND USES THEREOF**

(71) Applicant: Centre national de la recherche scientifique, 75016 Paris (FR); Université d'Aix-Marseille, 13007 Marseille (FR); Institut National Des Sciences Appliquees, 35708 Rennes (FR); Université de Rennes 1, 35065 Rennes Cedex (FR); Ecole Nationale Supérieure de Chimie de Rennes, 35000 Rennes (FR)
(72) Inventor: JAZZAR, Rodolphe, LA JOLLA, CA 92037 (US); BERTRAND, Guy, Solana Beach, CA 92075 (US); VERMERSCH, François, San Diego, CA 92122 (US); VANTHUYNE, Nicolas, 13013 MARSEILLE (FR); MAUDUIT, Marc, 35500 VITRE (FR); MORVAN, Jennifer, 56930 Pluméliau (FR)
(74) Representative: Lavoix

(57) **Abstract**

The present invention relates to a ruthenium complex having the following formula (I): 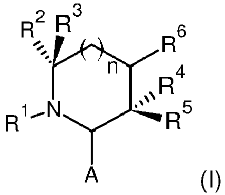 as well as the preparation method of said enantiomer, and uses thereof as catalyst, in particular in asymmetric olefin metathesis.

## Description

The present invention concerns new ruthenium complexes, as well as new optically pure enantiomers of these ruthenium complexes. The present invention also relates to preparation methods thereof, and uses thereof as catalysts.

Since their discovery in early 1960s, *N*-heterocyclic carbenes (NHCs) have become inescapable ligands in transition-metal (TM) catalyzed transformations, in both academic and industrial research environments (N-Heterocyclic Carbenes: From Laboratory Curiosities to Efficient Synthetic Tools (Eds.: S. Díez-González), RSC Catalysis series, RSC Publishing: Cambridge, 2011). In part, this growing popularity has been attributed to their remarkable aptitude in generating more stable, yet very reactive catalysts. Not surprisingly, chiral variants of diaminocarbenes naturally emerged in early 1990s, and thanks to their unique and highly modular steric environment, they also rapidly became privileged stereo-directing ligands with resounding successes in enantioselective catalysis ((a) Wang, F.; Liu, L.-J.; Wang, W.; Li, S.; Shi, M. Chiral NHC-Metal-Based Asymmetric Catalysis. Coord. Chem. Rev. 2012, 256, 804-853. (b) Janssen-Müller, D.; Schlepphorst, C.; Glorius, F. Privileged Chiral N-Heterocyclic Carbene Ligands for Asymmetric Transition-Metal Catalysis. Chem. Soc. Rev., 2017, 46, 4845-4854).

Recently however, a new class of chiral carbenes namely chiral cyclic (alkyl)(amino) carbenes (CAACs) arose as a contender to NHCs's dominion over carbene driven enantioselective catalysis ((a) Lavallo, V.; Canac, Y.; Pras̈ang, C.; Donnadieu, B.; Bertrand, G. Stable Cyclic (Alkyl)(Amino)Carbenes as Rigid or Flexible, Bulky, Electron-rich Ligands for Transition-Metal Catalysts: a Quaternary Carbon Atom Makes the Difference. Angew. Chem., Int. Ed. 2005, 44, 5705-5709. For a recent review on CAACs, see: (b) Soleilhavoup, M.; Bertrand, G. Cyclic (Alkyl)(Amino)Carbenes (CAACs): Stable Carbenes on the Rise; Acc. Chem. Res. 2015, 48, 256-266; (c) Melaimi, M., Jazzar, R., Soleilhavoup, M., Bertrand, G. Angew. Chem. Int. Ed., 2017, 56, 10056). In recent years, CAAC ligands have been shown by Bertrand, Grubbs and others to afford robust and well-defined CAAC-Ru precatalysts demonstrating remarkable catalytic performances in several metathesis transformations (Marx, V. M.; Sullivan, A. H.; Melaimi, M.; Virgil, S. C.; Keitz, B. K.; Weinberger, D. S.; Bertrand, G.; Grubbs, R. H. Cyclic Alkyl Amino Carbene (CAAC) Ruthenium Complexes as Remarkably Active Catalysts for Ethenolysis. Angew. Chem., Int. Ed. 2015, 54, 1919-1923. (b) Zhang, J.; Song, S.; Wang, X.; Jiao, J.; Shi, M. Ruthenium-Catalyzed Olefin Metathesis Accelerated by the Steric Effect of the Backbone Substituent in Cyclic (Alkyl)(Amino) Carbenes. Chem. Commun. 2013, 49, 9491-9493. (c) Anderson, D. R.; Lavallo, V.; O'Leary, D. J.; Bertrand, G.; Grubbs, R. H. Synthesis and Reactivity of Olefin Metathesis Catalysts Bearing Cyclic (Alkyl)(Amino)Carbenes. Angew. Chem., Int. Ed. 2007, 46, 7262-7265). Pioneered by Grubbs, Hoveyda and others, a slew of chiral diaminocarbene ligands and catalysts have been reported in recent years, with varying successes in asymmetric ring-opening cross-metathesis (AROCM)(Berlin, J. M.; Goldberg, S. D.; Grubbs, R. H. Highly Active Chiral Ruthenium Catalyst for Asymmetric Cross-Metathesis and Ring-Opening Cross-Metathesis. Angew. Chem. Int. Ed. 2006, 45, 7591-7595) and ring-closing metathesis (ARCM) transformations (Van Veldhuizen, J. J.; Gillingham, D. G.; Garber, S. B.; Kataoka, O.; Hoveyda, A. H. Chiral Ru-Based Complexes for Asymmetric Olefin Metathesis: Enhancement of Catalyst Activity through Steric and Electronic Modifications. J. Am. Chem. Soc. 2003, 125, 12502-12508).

Nevertheless, as a major drawback, number of these catalysts were obtained following tedious low yielding procedures, and very often only one of the two enantiomers was prepared.

The aim of the present invention is thus to provide new ruthenium complexes, and especially new optically pure ruthenium complexes that could be used for asymmetric catalysis.

Another aim of the present invention is to provide new optically pure ruthenium complexes to be used as catalysts for example for olefin metathesis.

Another aim of the present invention is to provide new optically pure ruthenium complexes that could be prepared by a process more economic and faster in comparison with the prior art processes.

The present invention relates to a ruthenium complex having the following formula (I): 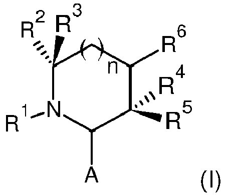 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
   said alkyl group being optionally substituted with at least one substituent chosen from the (C₆-C₁₀)aryl groups, and
   said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
   with the proviso that R⁵ is different from R⁴;
   or R⁴ and R⁵, taken together with the carbon atom to which they are attached, form a five-, six-, or ten-membered cycloalkyl or heterocyclyl ring;
- R⁶ is H or a (C₁-C₆)alkyl group;
- n is an integer comprised between 1 and 3, and is preferably 1;
   or R³ and R⁵, taken together with the carbon atom to which they are attached, form a six-, seven- or eight-membered cycloalkyl ring;
- A is either a group of formula (1) or a group of formula (2): 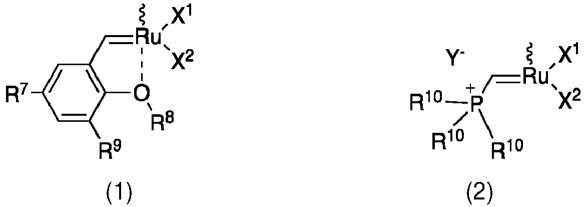 wherein:
   - X¹ is an halogen atom, a (C₁-C₆)alkoxy group or a -S-(C₆-C₁₀)aryl group;
   - X² is an halogen atom or a (C₁-C₆)alkoxy group;
      or X¹ and X² may form together with the ruthenium atom carrying them a heterocycloalkyl group fused with a phenyl group, said phenyl group being possibly substituted with at least one halogen atom,
   - R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
      Rₐ and R_{b} being independently selected from H and (C₁-C₆)alkyl,
      R and R' being selected from the following groups: (C₁-C₆)alkyl, (C₆-C₁₀)aryl, heteroaryl, and halo(C₁-C₆)alkyl,
      R_{c} being H or being selected from the following groups: (C₁-C₆)alkyl, (C₆-C₁₀)aryl, and heteroaryl,
      R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
   - R⁸ is a (C₁-C₆)alkyl group;
   - R¹⁰ is a (C₁-C₆)alkyl group; and
   - R⁹ is H, a (C₆-C₁₀)aryl group or a (C₁-C₆)alkyl group;
   - Y⁻ is a non-coordinating inorganic anion, and is preferably PF₆⁻, SbF₆⁻ or BF₄⁻,
   said complex being in the form of a racemic mixture, or in the form of an optically pure (+) or (-) enantiomer.

The present invention also relates to a ruthenium complex as defined above having the following formula (I): 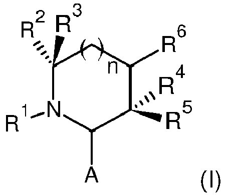 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R⁴ is selected from the following groups: (C₆-C₂₀)aryl, (C₁-C₁₀)alkyl, and (C₃-C₁₂)cycloalkyl group,
   said alkyl group being optionally substituted with at least one substituent chosen from the (C₆-C₁₀)aryl groups, and
   said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R³ and R⁵, taken together with the carbon atom to which they are attached, form a six-, seven- or eight- membered cycloalkyl ring;
- R⁶ is H or a (C₁-C₆)alkyl group;
- n is an integer comprised between 1 and 3, and is preferably 1;
- A is either a group of formula (1) or a group of formula (2): 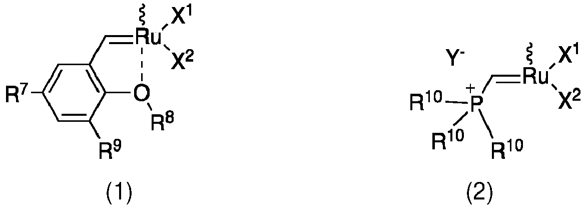 wherein:
   - X¹ is an halogen atom, a (C₁-C₆)alkoxy group or a -S-(C₆-C₁₀)aryl group;
   - X² is an halogen atom or a (C₁-C₆)alkoxy group;
      or X¹ and X² may form together with the ruthenium atom carrying them a heterocycloalkyl group fused with a phenyl group, said phenyl group being possibly substituted with at least one halogen atom,
   - R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
      Rₐ and R_{b} being independently selected from H and (C₁-C₆)alkyl,
      R and R' being selected from the following groups: (C₁-C₆)alkyl, (C₆-C₁₀)aryl, heteroaryl, and halo(C₁-C₆)alkyl,
      R_{c} being H or being selected from the following groups: (C₁-C₆)alkyl, (C₆-C₁₀)aryl, and heteroaryl,
      R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
   - R⁸ is a (C₁-C₆)alkyl group;
   - R¹⁰ is a (C₁-C₆)alkyl group; and
   - R⁹ is H, a (C₆-C₁₀)aryl group or a (C₁-C₆)alkyl group;
   - Y⁻ is a non-coordinating inorganic anion, and is preferably PF₆⁻, SbF₆⁻ or BF₄⁻,
   said complex being in the form of a racemic mixture, or in the form of an optically pure (+) or (-) enantiomer.

Preferably, the ruthenium complexes as mentioned above are in the form of optically pure (+) or (-) enantiomers.

Therefore, the present invention also relates to an optically pure (+) or (-) enantiomer of a ruthenium complex as defined above, having the following formula (I): 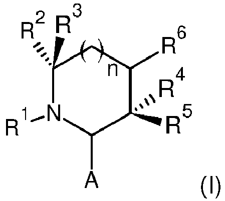 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
   said alkyl group being optionally substituted with at least one substituent chosen from the (C₆-C₁₀)aryl groups, and
   said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
   with the proviso that R⁵ is different from R⁴;
   or R⁴ and R⁵, taken together with the carbon atom to which they are attached, form a five-, six-, or ten-membered cycloalkyl or heterocyclyl ring;
- R⁶ is H or a (C₁-C₆)alkyl group;
- n is an integer comprised between 1 and 3, and is preferably 1;
   or R³ and R⁵, taken together with the carbon atom to which they are attached, form a six-, seven- or eight-membered cycloalkyl ring;
- A is either a group of formula (1) or a group of formula (2): 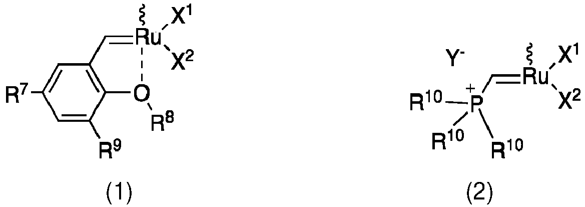
wherein:
- X¹ is an halogen atom, a (C₁-C₆)alkoxy group or a -S-(C₆-C₁₀)aryl group;
- X² is an halogen atom or a (C₁-C₆)alkoxy group;
   or X¹ and X² may form together with the ruthenium atom carrying them a heterocycloalkyl group fused with a phenyl group, said phenyl group being possibly substituted with at least one halogen atom,
- R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
   Rₐ and R_{b} being independently selected from H and (C₁-C₆)alkyl,
   R and R' being selected from the following groups: (C₁-C₆)alkyl, (C₆-C₁₀)aryl, heteroaryl, and halo(C₁-C₆)alkyl,
   R_{c} being H or being selected from the following groups: (C₁-C₆)alkyl, (C₆-C₁₀)aryl, and heteroaryl,
   R_{d} being H or selected from the following groups: (C₁-C₆)alkyl, halO(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;

- R⁸ is a (C₁-C₆)alkyl group;
- R¹⁰ is a (C₁-C₆)alkyl group; and
- R⁹ is H, a (C₆-C₁₀)aryl group or a (C₁-C₆)alkyl group; and
- Y⁻ is a non-coordinating inorganic anion, and is preferably PF₆⁻, SbF₆⁻ or BF₄⁻.

The compounds of the invention may also be represented by the following formula:

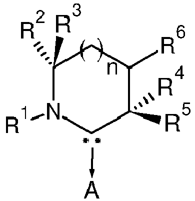

Preferably, in formula (I), R⁹ is H.

Preferably, in formula (I), n=1.

Preferably, in formula (I), R¹ is an aryl group, such as phenyl group, optionally substituted with one or several alkyl group(s).

Preferably, in formula (I), R² and R³ are selected from alkyl groups, and more preferably are methyl groups.

According to an embodiment, in formula (I), R⁵ is selected from alkyl groups, and more preferably is a methyl group, and R⁴ is selected from the following groups: (C₆-C₂₀)aryl, (C₁-C₁₀)alkyl, and (C₃-C₁₂)cycloalkyl, said aryl group being optionally substituted with at least one substituent chosen from the group consisting of: (C₁-C₆)alkyl, optionally substituted with one or several phenyl group(s), (C₆-C10)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl.

The present invention also relates to an optically pure (+) or (-) enantiomer of a ruthenium complex as defined above, having the following formula (II): 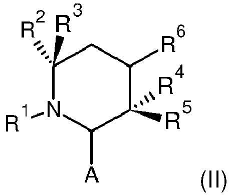 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R⁴ is selected from the following groups: (C₆-C₂₀)aryl, (C₁-C₁₀)alkyl, and (C₃-C₁₂)cycloalkyl group,
   said alkyl group being optionally substituted with at least one substituent chosen from the (C₆-C₁₀)aryl groups, and
   said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁶ is H or a (C₁-C₆)alkyl group;
- R³ and R⁵, taken together with the carbon atom to which they are attached, form a six-, or seven- or eight-membered cycloalkyl ring;
- A is either a group of formula (1) or a group of formula (2): 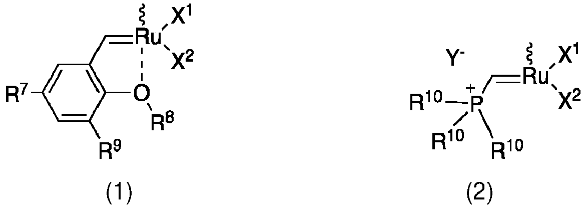 wherein:
   - X¹ is an halogen atom, a (C₁-C₆)alkoxy group or a -S-(C₆-C₁₀)aryl group;
   - X² is an halogen atom or a (C₁-C₆)alkoxy group;
      or X¹ and X² may form together with the ruthenium atom carrying them a heterocycloalkyl group fused with a phenyl group, said phenyl group being possibly substituted with at least one halogen atom,
   - R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
      Rₐ and R_{b} being independently selected from H and (C₁-C₆)alkyl,
      R and R' being selected from the following groups: (C₁-C₆)alkyl, (C₆-C₁₀)aryl, heteroaryl, and halo(C₁-C₆)alkyl,
      R_{c} being H or being selected from the following groups: (C₁-C₆)alkyl, (C₆-C₁₀)aryl, and heteroaryl,
      R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
   - R⁸ is a (C₁-C₆)alkyl group;
   - R¹⁰ is a (C₁-C₆)alkyl group; and
   - R⁹ is H, a (C₆-C₁₀)aryl group or a (C₁-C₆)alkyl group; and
   - Y⁻ is a non-coordinating inorganic anion, and is preferably PF₆⁻, SbF₆⁻ or BF₄⁻.

The present invention is based on the use of ^{Prep}HPLC as a simple and practical tool to obtain optically pure (>99% ee) (R)- and (S)-CAAC-Ru metathesis catalysts in almost quantitative yields, as explained below in the examples. The compounds of the invention yield active, but more importantly very selective catalysts for asymmetric ring-opening cross-metathesis (AROCM) reactions.

The present invention also relates to an optically pure (+) or (-) enantiomer of a ruthenium complex as defined above, having the following formula (III): 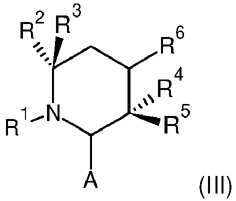 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
   said alkyl group being optionally substituted with at least one substituent chosen from the (C₆-C₁₀)aryl groups, and
   said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
   with the proviso that R⁵ is different from R⁴;
- R⁶ is H or a (C₁-C₆)alkyl group;
- A is either a group of formula (1) or a group of formula (2): 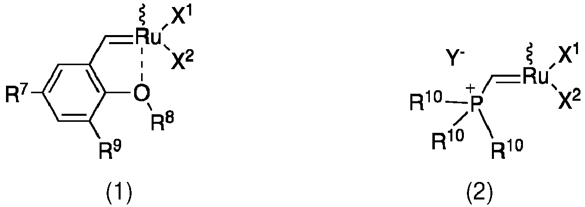 wherein:
   - X¹ is an halogen atom, a (C₁-C₆)alkoxy group or a -S-(C₆-C₁₀)aryl group;
   - X² is an halogen atom or a (C₁-C₆)alkoxy group;
      or X¹ and X² may form together with the ruthenium atom carrying them a heterocycloalkyl group fused with a phenyl group, said phenyl group being possibly substituted with at least one halogen atom,
   - R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
      Rₐ and R_{b} being independently selected from H and (C₁-C₆)alkyl,
      R and R' being selected from the following groups: (C₁-C₆)alkyl, (C₆-C₁₀)aryl, heteroaryl, and halo(C₁-C₆)alkyl,
      R_{c} being H or being selected from the following groups: (C₁-C₆)alkyl, (C₆-C₁₀)aryl, and heteroaryl,
      R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
   - R⁸ is a (C₁-C₆)alkyl group;
   - R¹⁰ is a (C₁-C₆)alkyl group; and
   - R⁹ is H, a (C₆-C₁₀)aryl group or a (C₁-C₆)alkyl group; and
   - Y⁻ is a non-coordinating inorganic anion, and is preferably PF₆⁻, SbF₆⁻ or BF₄⁻.

According to an embodiment, in formulae (I), (II), and (III), R¹ is a substituted phenyl group. Preferably, in formulae (I), (II), and (III), R¹ is a phenyl group being substituted with at least one or two substituent(s), said substituents being selected from the group consisting of: (C₁-C₆)alkyl groups, such as methyl, ethyl or isopropyl, halogen such as F, and -CH(Ar)₂, such as -CH(Ph)₂, Ar being an aryl group.

Preferably, in formulae (I), (II), and (III), R¹ is a phenyl group being substituted with two substituent(s) in ortho position, said substituents being identical or different.

As preferred R¹ groups, the followings may be mentioned:
- phenyl groups with two alkyl groups, in particular two identical alkyl groups, such as ethyl or isopropyl, in ortho position;
- wherein Ar is an aryl group as defined above, and preferably a phenyl group, and X is a halogen, preferably being Cl, Br or F; 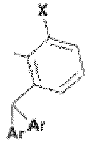 or

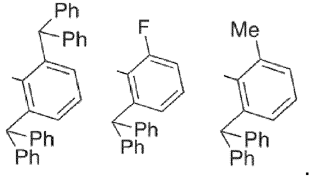

The present invention also relates to enantiomers as defined above having the following formula (IV): 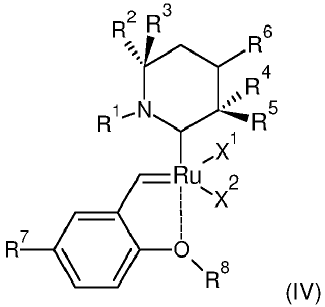 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from group consisting of (C₁-C₆)alkyl;
- R² is a (C₆-C₁₀)aryl group or a (C₁-C₆)alkyl group;
- R³ is a (C₁-C₆)alkyl group;
- R⁴ is a (C₆-C₁₀)aryl group, a (C₁-C₆)alkyl group or a (C₃-C₆)cycloalkyl group, said alkyl group being optionally substituted with at least one substituent chosen from the (C₆-C₁₀)aryl groups, such as phenyl, and said aryl group being optionally substituted with at least one substituent chosen from the (C₁-C₆)alkyl groups;
- R⁵ is selected from the following groups: (C₆-C₁₀)aryl, (C₁-C₆)alkyl, (C₃-C₆)cycloalkyl, heteroaryl, (C₆-C₁₀)aryl(C₁-C₆)alkyl, and heteroaryl(C₁-C₆)alkyl, said aryl group being optionally substituted with at least one substituent chosen from group consisting of (C₁-C₆)alkyl;
   with the proviso that R⁵ is different from R⁴;
- R⁶ is H or a (C₁-C₆)alkyl group;
   or R³ and R⁵, taken together with the carbon atom to which they are attached, form a six-membered cycloalkyl ring;
- R⁷ is H, nitro or a (C₁-C₆)alkyl group; and
- R⁸ is a (C₁-C₆)alkyl group.

A preferred group of enantiomers according to the invention consists of enantiomers as defined above having the following formula (V): 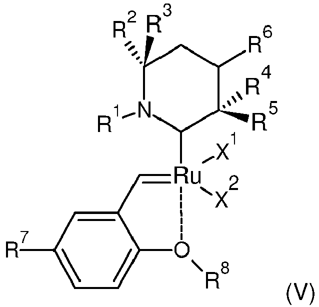 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from the (C₁-C₆)alkyl groups;
- R² is a (C₆-C₁₀)aryl group or a (C₁-C₆)alkyl group, preferably a (C₁-C₆)alkyl group such as methyl;
- R³ is a (C₁-C₆)alkyl group;
- R⁴ is a (C₆-C₁₀)aryl group, a (C₁-C₆)alkyl group or a (C₃-C₆)cycloalkyl group, said aryl group being optionally substituted with at least one substituent chosen from group consisting of (C₁-C₆)alkyl;
- R⁵ is selected from the following groups: (C₆-C₁₀)aryl, (C₁-C₆)alkyl, (C₃-C₆)cycloalkyl, heteroaryl, (C₆-C₁₀)aryl(C₁-C₆)alkyl, and heteroaryl(C₁-C₆)alkyl, said aryl group being optionally substituted with at least one substituent chosen from group consisting of (C₁-C₆)alkyl;
   with the proviso that R⁵ is different from R⁴;
- R⁶ is H or a (C₁-C₆)alkyl group;
- R⁷ is H, nitro or a (C₁-C₆)alkyl group; and
- R⁸ is a (C₁-C₆)alkyl group.

According to an embodiment, in formula (V), R⁴ is an alkyl group as defined above, preferably a methyl group, and R⁵ is an aryl group as defined above. Preferably, said aryl group is an anthracenyl radical or a (C₆-C₁₀)aryl group, such as a phenyl group, being substituted with at least one, in particular one, two or three, substituent(s), said substituent(s) being selected from the group consisting of: (C₁-C₆)alkyl groups, such as methyl or isopropyl, (C₁-C₆)alkylamino groups, di(C₁-C₆)alkylamino groups, (C₁-C₆)alcoxy groups, (C₆-C₁₀)aryl groups such as phenyl, and -CH(Ar)₂, such as -CH(Ph)₂, Ar being an aryl group. Preferably, R⁵ is a phenyl group being substituted with two substituent(s) in meta position, said substituents being identical or different, preferably identical.

According to an embodiment, in formulae (V), R⁴ is an aryl group as defined above and R⁵ is an alkyl group as defined above, preferably a methyl group. Preferably, said aryl group is an anthracenyl radical or a (C₆-C₁₀)aryl group, such as a phenyl group, being substituted with at least one, in particular one, two or three, substituent(s), said substituent(s) being selected from the group consisting of: (C₁-C₆)alkyl groups, such as methyl or isopropyl, (C₁-C₆)alkylamino groups, di(C₁-C₆)alkylamino groups, (C₁-C₆)alcoxy groups, (C₆-C₁₀)aryl groups such as phenyl, and -CH(Ar)₂, such as -CH(Ph)₂, Ar being an aryl group. Preferably, R⁴ is a phenyl group being substituted with two substituent(s) in meta position, said substituents being identical or different, preferably identical.

As preferred aryl groups for R⁴ (or R⁵), the followings may be mentioned:

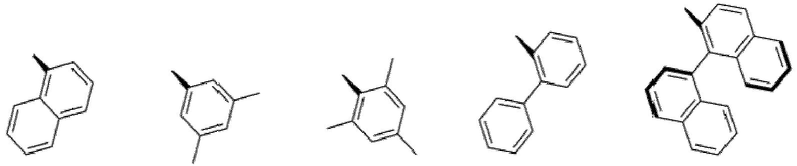

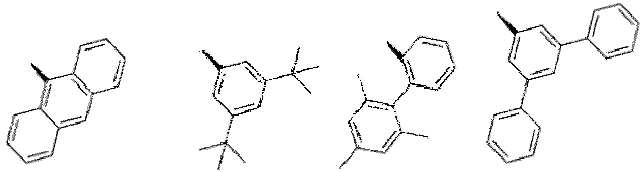

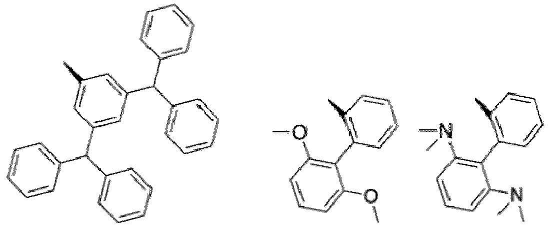

According to an embodiment, in formulae (V), R⁴ is an aryl group as defined above, said aryl group being optionally substituted with at least one substituent as defined hereafter, and R⁵ is an alkyl group as defined above, preferably a methyl group.

According to an embodiment, in formulae (V), R⁵ is an aryl group as defined above, said aryl group being optionally substituted with at least one substituent as defined hereafter, and R⁴ is an alkyl group as defined above, preferably a methyl group.

According to an embodiment, in formulae (V), R⁴ is an alkyl group as defined above, preferably a methyl group, and R⁵ is selected from the group consisting of: (C₁-C₁₀)alkyl, such as tertio-butyl group, and (C₃-C₁₂)cycloalkyl groups.

According to an embodiment, in formulae (V), R⁵ is an alkyl group as defined above, preferably a methyl group, and R⁴ is selected from the group consisting of: (C₁-C₁₀)alkyl, such as tertio-butyl group, and (C₃-C₁₂)cycloalkyl groups.

As preferred cycloakyl groups for R⁴ (or R⁵), the followings may be mentioned: 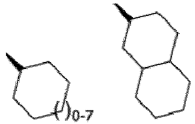 or adamantyl.

According to an embodiment, in formula (V), R⁴ is an alkyl group as defined above, preferably a methyl group, and R⁵ is an aryl group as defined above, preferably a phenyl group.

According to an embodiment, in formula (V), R⁵ is an alkyl group as defined above, preferably a methyl group, and R⁴ is an aryl group as defined above, preferably a phenyl group.

Preferably, in formula (V), R⁶ is H.

A preferred group of enantiomers according to the invention consists of enantiomers as defined above, having the following formula (VI): 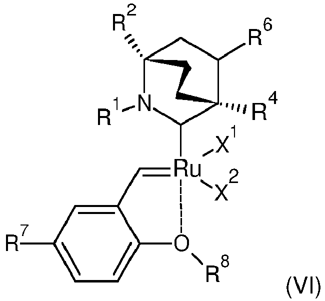 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from group consisting of (C₁-C₆)alkyl;
- R² is a (C₆-C₁₀)aryl group or a (C₁-C₆)alkyl group;
- R⁴ is a (C₆-C₁₀)aryl group, a (C₁-C₆)alkyl group or a (C₃-C₆)cycloalkyl group, said alkyl group being optionally substituted with at least one substituent chosen from the (C₆-C₁₀)aryl group, preferably phenyl, and said aryl group being optionally substituted with at least one substituent chosen from the (C₁-C₆)alkyl groups;
- R⁶ is H or a (C₁-C₆)alkyl group;
- R⁷ is H, nitro or a (C₁-C₆)alkyl group; and
- R⁸ is a (C₁-C₆)alkyl group.

Preferably, in formula (VI), R² is a (C₁-C₆)alkyl group, such as methyl.

Preferably, in formula (VI), R⁴ is a (C₁-C₆)alkyl group, such as methyl, ethyl, or propyl groups, optionally substituted by a phenyl group.

Preferably, in formula (VI), R⁶ is a (C₁-C₆)alkyl group.

In the context of the present invention, the expression "Cₜ-C_{z}" means a carbon-based chain which can have from t to z carbon atoms, for example C₁-C₃ means a carbon-based chain which can have from 1 to 3 carbon atoms.

According to the invention, the term "halogen" means: a fluorine, a chlorine, a bromine or an iodine.

According to the invention, the term "alkyl group" means: a linear or branched, saturated, hydrocarbon-based aliphatic group comprising, unless otherwise mentioned, from 1 to 12 carbon atoms. By way of examples, mention may be made of methyl, ethyl, n-propyl, isopropyl, butyl, isobutyl, tert-butyl or pentyl groups;

According to the invention, the term "cycloalkyl group" means: a cyclic carbon-based group comprising, unless otherwise mentioned, from 3 to 12 carbon atoms. By way of examples, mention may be made of cyclopropyl, cyclobutyl, cyclopentyl, cyclohexyl, or adamantyl etc. groups;

According to the invention, the term "haloalkyl group" means: an alkyl group as defined above, in which one or more of the hydrogen atoms is (are) replaced with a halogen atom. By way of example, mention may be made of fluoroalkyls, in particular CF₃ or CHF₂.

According to the invention, the term "alkoxy group" means: an -O-alkyl radical where the alkyl group is as previously defined. By way of examples, mention may be made of -O-(C₁-C₄)alkyl groups, and in particular the -O-methyl group, the -O-ethyl group as -O-C₃alkyl group, the -O-propyl group, the -O-isopropyl group, and as -O-C₄alkyl group, the -O-butyl, -O-isobutyl or -O-tert-butyl group.

According to the invention, the term "aryl group" means: a cyclic aromatic group comprising between 6 and 10 carbon atoms. By way of examples of aryl groups, mention may be made of phenyl or naphthyl groups.

According to the invention, the term "heteroaryl" means: a 5- to 10-membered aromatic monocyclic or bicyclic group containing from 1 to 4 heteroatoms selected from O, S or N. By way of examples, mention may be made of imidazolyl, thiazolyl, oxazolyl, furanyl, thiophenyl, pyrazolyl, oxadiazolyl, tetrazolyl, pyridinyl, pyrazinyl, pyrimidinyl, pyridazinyl, indolyl, benzofuranyl, benzothiophenyl, benzoxazolyl, benzimidazolyl, indazolyl, benzothiazolyl, isobenzothiazolyl, benzotriazolyl, quinolinyl and isoquinolinyl groups.

By way of a heteroaryl comprising 5 to 6 atoms, including 1 to 4 nitrogen atoms, mention may in particular be made of the following representative groups: pyrrolyl, pyrazolyl, 1,2,3-triazolyl, 1,2,4-triazolyl, tetrazolyl and 1,2,3-triazinyl.

Mention may also be made, by way of heteroaryl, of thiophenyl, oxazolyl, furazanyl, 1,2,4-thiadiazolyl, naphthyridinyl, quinoxalinyl, phthalazinyl, imidazo[1,2-a]pyridine, imidazo[2,1-b]thiazolyl, cinnolinyl, benzofurazanyl, azaindolyl, benzimidazolyl, benzothiophenyl, thienopyridyl, thienopyrimidinyl, pyrrolopyridyl, imidazopyridyl, benzoazaindole, 1,2,4-triazinyl, indolizinyl, isoxazolyl, isoquinolinyl, isothiazolyl, purinyl, quinazolinyl, quinolinyl, isoquinolyl, 1,3,4-thiadiazolyl, thiazolyl, isothiazolyl, carbazolyl, and also the corresponding groups resulting from their fusion or from fusion with the phenyl nucleus.

According to the invention, the term" heterocycloalkyl" means: a 4- to 10-membered, saturated or partially unsaturated, monocyclic or bicyclic group comprising from one to three heteroatoms selected from O, S or N; the heterocycloalkyl group may be attached to the rest of the molecule via a carbon atom or via a heteroatom; the term bicyclic heterocycloalkyl includes fused bicycles and spiro-type rings.

By way of saturated heterocycloalkyl comprising from 5 to 6 atoms, mention may be made of oxetanyl, tetrahydrofuranyl, dioxolanyl, pyrrolidinyl, azepinyl, oxazepinyl, pyrazolidinyl, imidazolidinyl, tetrahydrothiophenyl, dithiolanyl, thiazolidinyl, tetrahydropyranyl, tetrahydropyridinyl, dioxanyl, morpholinyl, piperidinyl, piperazinyl, tetrahydrothiopyranyl, dithianyl, thiomorpholinyl or isoxazolidinyl.

When the heterocycloalkyl is substituted, the substitution(s) may be on one (or more) carbon atom(s) and/or on the heteroatom(s). When the heterocycloalkyl comprises several substituents, they may be borne by one and the same atom or different atoms.

The abovementioned "alkyl", "cycloalkyl", "aryl", "heteroaryl" and "heterocycloalkyl" radicals can be substituted with one or more substituents. Among these substituents, mention may be made of the following groups: amino, hydroxyl, thiol, oxo, halogen, alkyl, alkoxy, alkylthio, alkylamino, aryloxy, arylalkoxy, cyano, trifluoromethyl, carboxy or carboxyalkyl.

According to the invention, the term "alkylthio" means: an -S-alkyl group, the alkyl group being as defined above.

According to the invention, the term "arylthio" means: an -S-aryl group, the aryl group being as defined above.

According to the invention, the term "alkylamino" means: an -NH-alkyl group, the alkyl group being as defined above.

According to the invention, the term "cycloalkyloxy" means: an -O-cycloalkyl group, the cycloalkyl group being as defined above.

According to the invention, the term "aryloxy" means: an -O-aryl group, the aryl group being as defined above.

According to the invention, the term "(hetero)arylalkoxy" means: a (hetero)arylalkoxy- group, the (hetero)aryl and alkoxy groups being as defined above.

According to the invention, the term "alkylcarbonyl" means a -CO-alkyl group, the alkyl group being as defined above.

According to the invention, the term "alkoxylcarbonyl" means a -CO-O-alkyl group, the alkyl group being as defined above.

According to the invention, the term "arylcarbonyl" means a -CO-aryl group, the aryl group being as defined above.

According to the invention, the term "aryloxycarbonyl" means a -CO-aryloxy group, the aryloxy group being as defined above.

According to the invention, the term "alkylsulfonyl" means a -SO₂-alkyl group, the alkyl group being as defined above.

According to the invention, the term "arylsulfonyl" means a -SO₂-aryl group, the aryl group being as defined above.

According to the invention, the term "alkylsulfinyl" means a -SO-alkyl group, the alkyl group being as defined above.

According to the invention, the term "arylsulfinyl" means a -SO-aryl group, the aryl group being as defined above.

According to the invention, the term "carboxyalkyl" means: an HOOC-alkyl-group, the alkyl group being as defined above. As examples of carboxyalkyl groups, mention may in particular be made of carboxymethyl or carboxyethyl.

According to the invention, the term "carboxyl" means: a COOH group.

According to the invention, the term "oxo" means: "=O".

When an alkyl radical is substituted with an aryl group, the term "arylalkyl" or "aralkyl" radical is used. The "arylalkyl" or "aralkyl" radicals are aryl-alkyl- radicals, the aryl and alkyl groups being as defined above. Among the arylalkyl radicals, mention may in particular be made of the benzyl or phenethyl radicals.

According to an embodiment, in formula (IV), (V) or (VI), X¹ and X² are halogen atoms, preferably Cl.

According to an embodiment, in formula (IV), (V) or (VI), R¹ is a (C₆-C₁₀)aryl group substituted with at least one substituent chosen from the (C₁-C₆)alkyl groups, preferably a phenyl group substituted with two alkyl groups, such as isopropyl or ethyl groups.

According to an embodiment, in formula (IV), (V) or (VI), R² is a (C₁-C₆)alkyl group.

According to an embodiment, in formula (IV) or (V), R² and R³ are identical, and are preferably a methyl group.

According to an embodiment, in formula (IV) or (V), R⁴ and R⁵ are different and selected from the following groups: (C₆-C₁₀)aryl such as phenyl or naphthyl, (C₁-C₆)alkyl such as methyl, and (C₃-C₆)cycloalkyl such as cyclohexyl, said aryl group being optionally substituted with two substituents selected from the (C₁-C₆)alkyl groups.

According to an embodiment, in formula (IV), (V) or (VI), R⁷ is H or nitro.

The present invention also relates to an optically pure (+) or (-) enantiomer as defined above, having one of the following formulae:

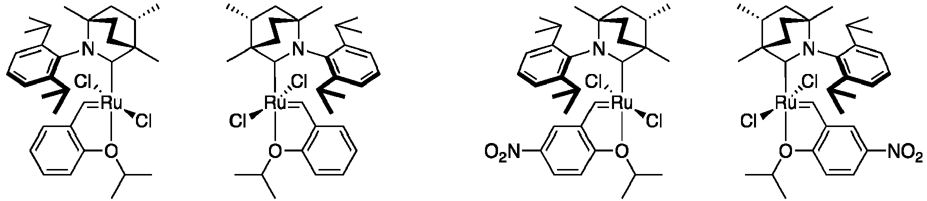

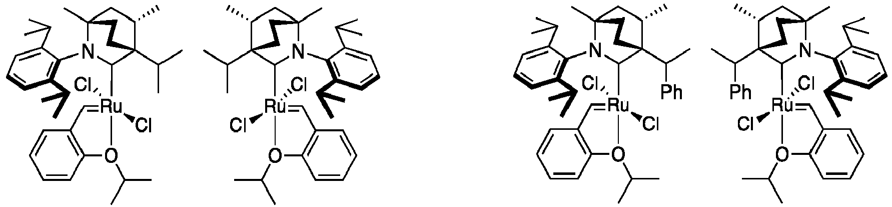

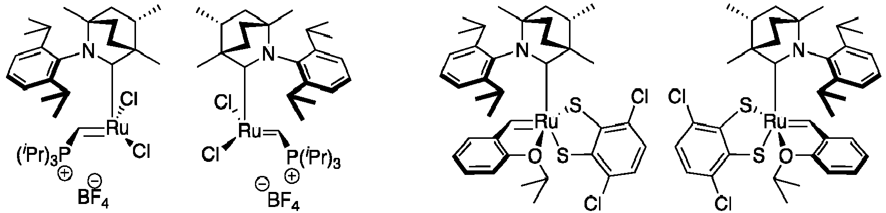

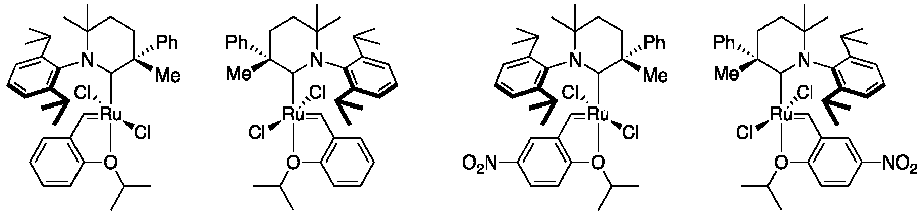

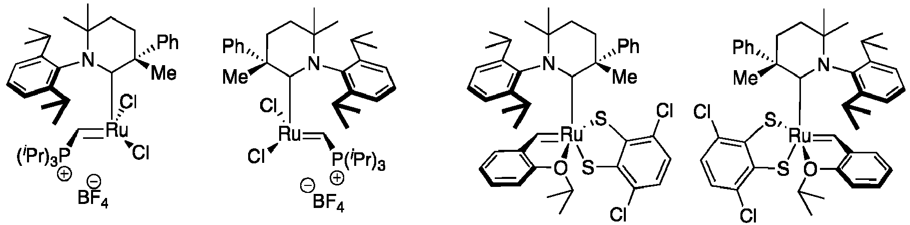

The present invention also relates to the use of an optically pure (+) or (-) enantiomer as defined above as a catalyst.

The present invention also relates to the use of an optically pure (+) or (-) enantiomer as defined above, as a catalyst in asymmetric olefin metathesis.

The present invention also relates to a process for the preparation of an optically pure (+) or (-) enantiomer, comprising a step of chiral HPLC separation of racemic ruthenium complexes of formula (I).

Preferably, said step of chiral HPLC separation is carried out with a HPLC column comprising amylose substituted with chloro-phenylcarbamate as chiral stationary phase.

### EXAMPLES

### PREPARATION OF THE COMPOUNDS OF THE INVENTION

### General information

All manipulations were carried out in an argon-filled glovebox or using standard Schlenk techniques. Glassware was dried in an oven overnight at 150 °C or flame dried prior to use. Toluene and tetrahydrofuran, used for complex synthesis and catalysis, were purified using MBraun Solvent Purification Systems and freeze-pump-thaw degassed prior to use. Reactions were monitored by thin-layer chromatography (TLC) carried out on aluminium backed silica gel 60 (F254) plates from MERCK (grain-size distribution 60/20 µm); visualised using 254 nm UV light and KMnO₄/K₂CO₃/NaOH in water for staining. Columns chromatography were performed with silica gel (spherical, particle size 40 µm, neutral) purchased from Sigma-Aldrich. The eluents employed are reported as volume (volume percentages).
**NMR:** For CAACs salts, NMR spectra were recorded on a Varian INOVA 500 MHz spectrometer. For Ru complexes and catalysis products, multinuclear NMR spectra were recorded on a Bruker ARX400 400 MHz spectrometer. For nucleus other than ¹H spectra were recorded with complete proton decoupling. Chemical shifts are reported in parts per million with the solvent resonance as the internal standard. Coupling constants (J) are reported in Hertz (Hz). Multiplicities in ¹H NMR are reported using following abbrevations: s = singlet, br s = broad singlet, d = doublet, dd = double doublet, ddd = double double doublet, dt = double triplet, t = triplet, q = quartet, quint = quintet, sept = septet, m = multiplet. When not specified, spectra were recorded at 298 K.
**High Resolution Mass Spectrometry (HRMS):** For CAACs salts, HRMS were performed at the UC San Diego Mass Spectrometry Laboratory on an Agilent 6230 Accurate-Mass TOFMS spectrometer using electrospray ionization. (ESI). For Ru complexes and catalysis products HRMS were recorded on a Waters QTof-I spectrometer using ESI at the Centre Regional de Mesures Physiques de l'Ouest (CRMPO), Université de Rennes 1.
**Preparative chiral HPLC:** ^{Prep}HPLC Chiral separations were performed on an Agilent 1260 Infinity unit (pump G1311C, autosampler G1329B, DAD G1365D and fraction collector G1364C), monitored by Agilent OpenLAB CDS Chemstation LC at Aix Marseille University. 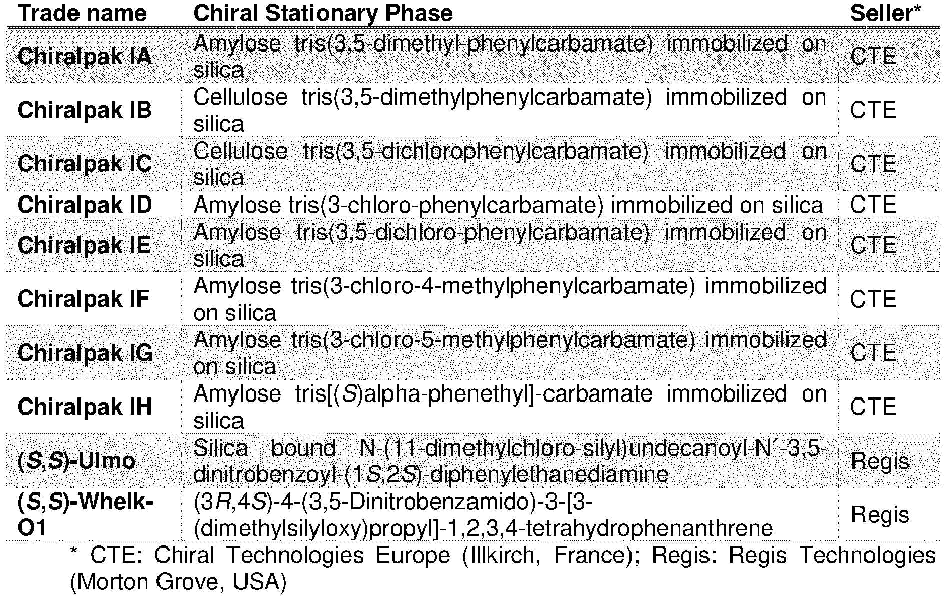
**Optical rotations:** Optical rotations for the complexes were measured at Aix Marseille University on a Jasco P-2000 polarimeter with a sodium lamp (589 nm), a halogen lamp (578, 546, 436, 405, 365 and 325 nm), in a 10 cm cell, thermostated at 25°C with a Peltier controlled cell holder. Optical rotations for the catalysis products were measured at Institut des Sciences Chimiques de Rennes on a Jasco P-2000 polarimeter with a sodium lamp (589 nm), in a 1 cm cell, thermostated at 25°C with a Peltier controlled cell holder.
**Electronic Circular Dichroism (ECD) and UV:** ECD and UV spectra were measured on a JASCO J-815 spectrometer equipped with a JASCO Peltier cell holder PTC-423 to maintain the temperature at 25.0 ± 0.2°C. A CD quartz cell of 1 mm of optical path length was used. The CD spectrometer was purged with nitrogen before recording each spectrum, which was baseline subtracted. The baseline was always measured for the same solvent and in the same cell as the samples. Acquisition parameters: 0.1 nm as intervals, scanning speed 50 nm/min, band width 2 nm, and 3 accumulations per sample. The spectra are presented without smoothing and further data processing.
**X-Ray crystallography:** Intensity data were collected on a D8 VENTURE Bruker AXS diffractometer equipped with a (CMOS) PHOTON 100 detector using MoK*α* radiation (0.71073 Å) at T = 150 K. Data reduction was performed using the SHELXT program. The structures were resolved using the software SHELXS-97 by the direct methods and refined using SHELXL-2013-4.

### BiCAAC salt synthesis

### General procedure for the synthesis of imine

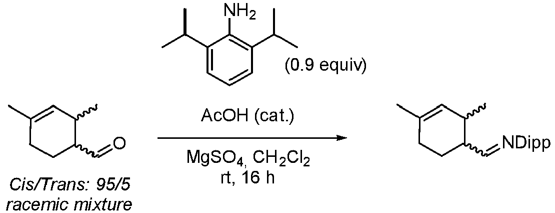

The commercially available 2,4-dimethyl-3-cyclohexene carboxaldehyde or trivertal (1 equiv, racemic mixture) was dissolved in DCM (100 mL of DCM for 10 mL of aldehyde) followed by the addition of 2,6-diisopropylaniline (0.9 equiv), anhydrous MgSO₄ (in excess) and glacial acetic acid (catalytic amount). The mixture was stirred overnight at room temperature under air. The suspension was filtered, and the volatiles removed under vacuum. The excess of aldehyde was distilled off under vacuum helped by a heat gun. Imine was obtained as a slightly orange liquid and used in the next step without further purification.

### General procedure for the alkylation of imines

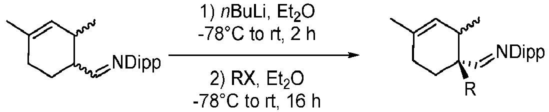

In a Schlenk under argon, imine (1 equiv) was dissolved in dry Et₂O (150 mL for 20 g of imine) and the solution was cooled down to -78°C. n-Butyl lithium (2.5 M in hexanes, 1.1 equiv) was added and the mixture allowed to warm up to room temperature. After 2 h the mixture was cooled down to -78°C and the corresponding alkyl halide (1.2 equiv) was added. The reaction was slowly warmed up and stirred overnight at room temperature. Volatiles were removed under vacuum leading to a mixture of solid and oily residue. The crude product was well dried under vacuum with a heat gun and was used without further purification.

### General procedure for the synthesis of bicyclic iminium salts

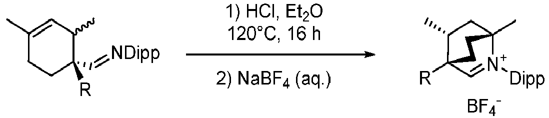

The corresponding crude mixture of imines and LiX was dissolved in a minimum of dry Et₂O under argon. The solution was transferred via canula to a pressure Schlenk of 1L of volume. At 0°C, a solution of HCI 2.0 M in Et₂O (2.0 equiv in respect to imine before alkylation) was added. Precipitation of white powder in a yellow solution was observed. The solution was stirred at room temperature for 15 min, then at 120°C overnight, and to finish at 50°C for 1 day. The mixture was cooled down to room temperature and the solid was filtered via canula under argon. Then, it was washed under argon with Et₂O (x3). Once the excess of HCI was removed the solid was filtered under air in frit, washed with more Et₂O and finally pentane afforded cyclic iminium salt HCl₂⁻ as a white powder. This powder was dissolved in water, filtered to remove some brownish precipitate and NaBF₄ (2.0 equiv) was added. Precipitation of white powder was immediately observed. The solution was stirred at room temperature overnight. Filtration and washing of the precipitate with water, Et₂O (x3) and pentane afforded cyclic iminium salt BF₄⁻.

### BiCAACs characterization

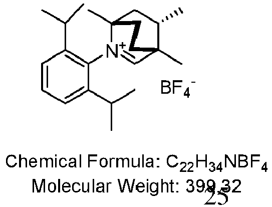

### (1S,4R,5S)-2-(2,6-diisopropylphenyl)-1,4,5-trimethyl-2-azabicyclo [2.2.2]oct-2-en-2-ium tetrafluoroborate (BiCAAC-1)

**BiCAAC-1** was prepared according to the 3-step procedure for BiCAAC synthesis with Trivertal (1 equiv), 2,6-diisopropylaniline (0.9 equiv) and lodomethane (1.2 equiv). The desired product was obtained as a white powder (33% yield).
**¹H NMR (300 MHz, *CDCl₃*):** d (ppm) 9.29 (s, 1H), 7.49 (t, *J* = 7.8 Hz, 1H), 7.30 (d, *J* = 7.8 Hz, 1H), 7.30 (d, *J* = 7.8 Hz, 1H), 2.65 (sept, *J* = 6.9 Hz, 1H), 2.59 (dd, *J* = 10.2, 14.1 Hz, 1H), 2.31-2.39 (m, 1H), 2.33 (sept, *J* = 6.9 Hz, 1H), 2.12-2.26 (m, 2H), 1.84-1.93 (m, 1H), 1.70-1.79 (m, 1H), 1.64 (s, 3H), 1.57-1.62 (m, 1H), 1.33 (d, *J* = 6.9 Hz, 3H), 1.27 (d, *J* = 6.9 Hz, 3H), 1.21 (d, , *J* = 6.9 Hz, 3H), 1.19 (s, 3H), 1.16 (d, *J* = 6.6 Hz, 3H), 1.04 (d, *J* = 7.2 Hz, 3H).
**¹³C NMR (125 MHz, *CDCl₃*):** d (ppm) 194.6, 144.1, 143.6, 135.6, 132.0, 125.9, 125.5, 69.5, 45.3, 43.2, 38.3, 32.8, 32.7, 29.5, 28.8, 24.8, 24.7, 23.5, 22.4, 21.5, 20.2, 18.7.
**¹⁹F NMR (282 MHz, *CDCl₃*):** d (ppm) -152.66 (s, ¹⁰BF₄⁻), -152.71 (s, ¹¹BF₄⁻). **HRMS** for C₂₂H₃₄N (M⁺): calc.: 312.2686, found: 312.2684.

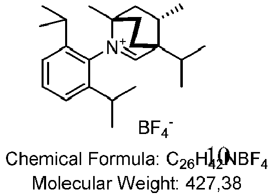

### (1S,4S,5S)-2-(2,6-diisopropylphenyl)-4-isopropyl-1 ,5-dimethyl-2-a-zabicyclo[2.2.2]oct-2-en-2-ium tetrafluoroborate (BiCAAC-2)

**BiCAAC-2** was prepared according to the 3-step procedure for BiCAAC synthesis with Trivertal (1 equiv), 2,6-diisopropylaniline (0.9 equiv) and lodopropane (1.2 equiv). The desired product was obtained as a white powder (15% yield).
**¹H NMR (300 MHz, *CDCl₃*):** d (ppm) 9.28 (s, 1H), 7.51 (t, *J* = 7.8 Hz, 1H), 7.33 (d, *J* = 7.8 Hz, 1H), 7.32 (d, *J* = 7.8 Hz, 1H), 2.77 (sept, *J* = 6.9 Hz, 1H), 2.68 (sept, *J =* 6.9 Hz, 1H), 2.61-2.65 (m, 2H), 2.27 (sept, *J* = 6.9 Hz, 1H), 2.23-2.33 (m, 1H), 2.12-2.21 (m, 1H), 1.81-1.92 (m, 1H), 1.66-1.75 (m, 2H), 1.36 (d, *J* = 6.9 Hz, 3H), 1.29 (d, *J* = 6.9 Hz, 3H), 1.22 (s, 3H), 1.22 (d, *J* = 6.9 Hz, 3H), 1.21 (d, *J* = 7.2 Hz, 3H), 1.16 (d, *J* = 6.9 Hz, 3H), 1.05 (d, *J* = 7.2 Hz, 3H), 1.02 (d, *J* = 6.9 Hz, 3H).
**¹³C NMR (125 MHz, *CDCl₃*):** d (ppm) 194.5, 143.9, 143.9, 135.8, 132.2, 125.9, 125.9, 69.2, 51.8, 43.5, 35.9, 32.4, 29.9, 29.0, 26.6, 24.8, 24.7, 23.4, 22.5, 22.2, 21.5, 19.6, 19.2, 15.0.
**¹⁹F NMR (282 MHz, *CDCl₃*):** d (ppm) -153.58 (s, ¹⁰BF₄⁻), -153.63 (s, ¹¹BF₄⁻). **HRMS** for C₂₄H₃₈N (M⁺): calc.: 340.2999, found: 340.2996.

### (1S,4R,5S)-2-(2,6-diisopropylphenyl)-1,5-dimethyl-4-(1-phenylethyl)-2-azabicyclo[2.2.2]oct-2-en-2-ium tetrafluoroborate (BiCAAC-3)

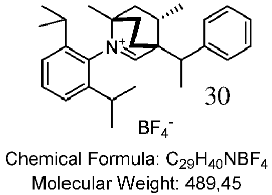

**BiCAAC-3** was prepared according to the 3-step procedure for BiCAAC synthesis with Trivertal (1 equiv), 2,6-diisopropylaniline (0.9 equiv) and (1-bromoethyl)benzene (1.2 equiv). The desired product was obtained as a white powder (% yield, Diastereoisomer mixture, ratio 5:1).
**¹H NMR (500 MHz, *CD₃OD*), major diastereosimer:** d (ppm) 9.24 (s, 1H), 7.56 (t, *J* = 8.0 Hz, 1H), 7.52 (d, *J* = 7.5 Hz, 2H), 7.48 (d, *J* = 8.0 Hz, 1H), 7.38 (t, *J =* 7.5 Hz, 2H), 7.35 (d, *J* = 8.0 Hz, 1 H), 7.29 (t, *J* = 7.5 Hz, 1H), 3.79 (sept, *J* = 7.0 Hz, 1H), 2.82-2.90 (m, 1H), 2.78 (sept, *J* = 7.0 Hz, 1H), 2.69-2.74 (m, 1H), 2.54-2.59 (m, 1H), 2.27-2.32 (m, 1H), 1.81-1.85 (m, 1H), 1.69-1.76 (m, 3H), 1.50 (d, *J =* 7.0 Hz, 3H), 1.43 (d, *J* = 7.0 Hz, 3H), 1.28 (d, *J* = 7.0 Hz, 3H), 1.21 (d, *J* = 7.0 Hz, 3H), 1.21 (s, 3H), 1.09 (d, *J* = 7.0 Hz, 3H), 0.45 (d, *J* = 7.0 Hz, 3H)
**¹³C NMR (125 MHz, *CD₃OD*), major diastereosimer:** d (ppm) 194.1, 145.6, 145.3, 143.1, 137.5, 133.5, 131.3, 130.4, 129.2, 127.3, 127.2, 71.2, 53.1, 44.6, 40.1, 37.1, 34.1, 31.3, 29.8, 25.8, 25.1, 24.4, 23.4, 22.6, 21.8, 20.3, 13.6.

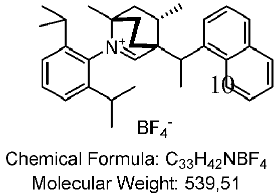

### (1 S,4R,5S)-2-(2,6-diisopropyl phenyl)-1 ,5-dimethyl-4-(1-(naphtha-len-1-yl)ethyl)-2-azabicyclo[2.2.2]oct-2-en-2-ium tetrafluoroborate (BiCAAC-4)

**BiCAAC-4** was prepared according to the 3-step procedure for BiCAAC synthesis with Trivertal (1 equiv), 2,6-diisopropylaniline (0.9 equiv) and 1-(1-bromoethyl)naphthalene (1.2 equiv). The desired product was obtained as a white powder (% yield, Diastereoisomer mixture, ratio 3:1).
**¹H NMR (500 MHz, *CDCl₃*), major diastereosimer:** d (ppm) 8.82 (s, 1H), 7.46 (t, *J* = 7.5 Hz, 1H), 7.38 (d, *J* = 7.5 Hz, 2H), 7.29-7.33 (m, 5H), 7.21 (t, *J* = 7.5 Hz, 1H), 7.15 (d, *J* = 8.0 Hz, 1H), 3.76 (q, *J* = 7.5 Hz, 1H), 2.80 (sept, *J* = 7.0 Hz, 1H), 2.75-2.82 (m, 1H), 2.68 (sept, *J* = 7.0 Hz, 1H), 2.55-2.59 (m, 1H), 2.36-2.42 (m, 1H), 2.07-2.14 (m, 1H), 1.59-1.70 (m, 3H), 1.42 (d, *J* = 7.5 Hz, 3H), 1.34 (d, *J* = 7.0 Hz, 3H), 1.20 (d, *J* = 7.0 Hz, 3H), 1.17 (d, *J* = 7.0 Hz, 3H), 1.16 (s, 3H), 1.03 (d, *J* = 7.0 Hz, 3H), 0.31 (d, *J* = 7.0 Hz, 3H)
**¹³C NMR (125 MHz, *CDCl₃*), major diastereosimer:** d (ppm) 191.3, 143.9, 143.7, 141.3, 135.8, 132.3, 129.9, 129.9, 129.7, 129.5, 129.5, 128.9, 128.1, 125.8, 125.8, 70.3, 51.6, 43.7, 38.5, 35.6, 32.7, 29.9, 28.5, 25.2, 25.0, 23.7, 23.1, 22.3, 21.3, 20.0, 13.0.

### Complexes synthesis

**Reagents used for complex synthesis:** Synthesized salts were dried at 60°C under high vacuum overnight before complexation. KHMDS (0.5 M in toluene) was purchased from Sigma Aldrich.
- *Hoveyda-Grubbs 1^{st} generation (HG1)* complex was previously synthesized using the following procedure: In an oven dried Schlenk under Ar, were placed Dichloro(3-phenyl-1H-inden-1-ylidene) bis(tricyclohexylphosphine)ruthenium(II) (M1, purchased from Umicore) complex (2.0 g, 2.2 mmol, 1 equiv) and CuCI (236.0 mg, 2.4 mmol, 1.1 equiv). A solution of 2-isopropoxystyrene (synthesized from salicylaldehyde by alkylation and Wittig olefination following a previously reported procedure)¹ (390.0 mg, 2.4 mmol, 1.1 equiv) in DCM (6 mL) was added, then DCM was added to obtain 50 mL solution. The resulting mixture was stirred for 2 h at 40°C. The reaction was monitored by TLC (Pentane:Acetone 9:1) until the complete disappearance of M1. DCM was evaporated under reduced pressure and the solid was taken in Acetone (HPLC grade) and filtered through celite pad until the undesired solid became whitish. Volatiles were removed under vacuum and the obtained solid was dissolved in CHCl₃ and filtered off. The filtrate was evaporated and the solid was dissolved in warm Et₂O and the catalyst was precipitated with Pentane (3 times). The mixture was filtered off and the brown solid was collected (955 mg, 74% yield). Analytical data were consistent with the previously reported data. 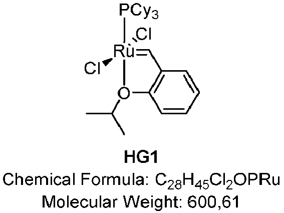
- 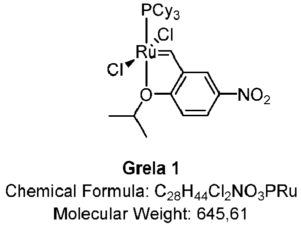 *Grela 1^{st} generation (Grela-1)* complex was previously synthesized using the following procedure: In an oven dried Schlenk under Ar, were placed Dichloro(3-phenyl-1H-inden-1-ylidene) bis(tricyclohexylphosphine)ruthenium(II) (M1, purchased from Umicore) complex (1.0 g, 1.08 mmol, 1 equiv) and CuCI (174.1 mg, 1.76 mmol, 1.6 equiv). A solution of 1-isopropoxy-4-nitro-2-vinylbenzene (synthesized from 2-hydroxy-5-nitrobenzaldehyde by alkylation and Wittig olefination following a previously reported procedure)³ (523.6 mg, 2.53 mmol, 2.3 equiv) in DCM (5 mL) was added, then DCM (5 mL) was added. The resulting mixture was stirred for 5 h at 35°C. The reaction was monitored by ³¹P NMR. DCM was evaporated under reduced pressure and the solid was taken up in Acetone (HPLC grade) and filtered through a celite pad until the undesired solid became whitish. The volatiles were removed under reduced pressure. The crude mixture was purified by chromatography on silica gel (pentane:Et₂O 95:5 then 7:3) and the resulting solid washed with pentane to afford the desired complex as a brown solid (426 mg, 61% yield). Analytical data were consistent with those already reported in the literature.³

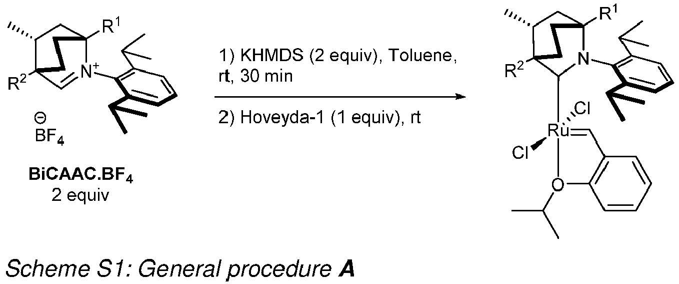

**General Procedure:** In a glove box, BiCAAC.BF₄ (2 equiv) was dissolved in dry and degassed Toluene. KHMDS (0.5 M in toluene, 2 equiv) was added. The mixture was allowed to stirred 20 min at rt. Then, HG1 complex (1 equiv) was then added. The mixture was stirred the indicated time at rt.

The solvent was removed under vacuum and the product was purified by column chromatography (eluent: Pentane:Acetone 9:1). The solid was then diluted in the minimum amount of DCM and precipitated in pentane.

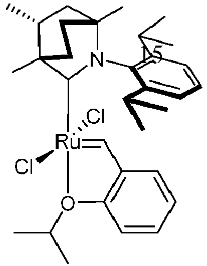

### BiCAAC (Me/Me - dipp)-Ru Hoveyda type complex (BiCAAC-Ru-1)

**BiCAAC-Ru-1** was prepared according to the general procedure for the complexes synthesis using **BiCAAC-1** (266 mg, 0.67 mmol, 2 equiv), KHMDS (1.33 mL, 0.67 mmol, 2 equiv) and HG1 (200 mg, 0.33 mmol, 1 equiv). The mixture was stirred 30 min. The desired product was obtained as a green solid (177 mg, 86 % yield).
**¹H NMR (400 MHz, *CDCl₃*):** d (ppm) 16.46 (s, 1H), 7.53 (t, *J* = 7.7 Hz, 1H), 7.43 (ddd, *J* = 8.4, 6.7, 2.3 Hz, 1H), 7.36 (ddd, *J* = 9.3, 7.7, 1.6 Hz, 2H), 6.84 (d, *J* = 8.3 Hz, 1H), 6.79 - 6.69 (m, 2H), 5.06 (sept, *J* = 6.2 Hz, 1H), 3.02 (sept, *J* = 6.7 Hz, 1H), 2.82 - 2.70 (m, 4H), 2.43 (ddd, *J* = 13.2, 11.9, 6.0 Hz, 1H), 2.07 - 1.89 (m, 2H), 1.87 - 1.77 (m, 1H), 1.74 (d, *J* = 6.1 Hz, 3H), 1.67 (d, *J* = 6.1 Hz, 3H), 1.65 - 1.51 (m, 2H), 1.43 - 1.50 (m, 1H), 1.25 (d, *J* = 6.9 Hz, 3H), 1.20 (dd, *J* = 6.8, 5.8 Hz, 7H), 0.89 (s, 3H), 0.76 (d, *J* = 6.6 Hz, 3H), 0.62 (d, *J* = 6.5 Hz, 3H).
**¹³C NMR (101 MHz, *CDCl₃*):** d (ppm)

**BiCAAC (iPr/iPr** - **dipp)-Ru Hoveyda type complex (BiCAAC-Ru-2)** 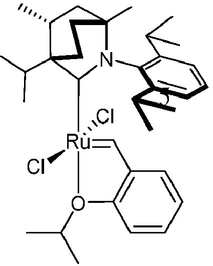 **BiCAAC-Ru-2** was prepared according to the general procedure for the complexes synthesis using **BiCAAC-2** (20 mg, 0.045 mmol, 2 equiv), KHMDS (90 µL, 0.045 mmol, 2 equiv) and HG1 (13.6 mg, 0.0226 mmol, 1 equiv). The mixture was stirred 4 h. The desired product was obtained as a green solid (9.9 mg, 65 % yield).

**BiCAAC (CHMePh/Me - dipp)-Ru Hoveyda type complex (BiCAAC-Ru-3)** 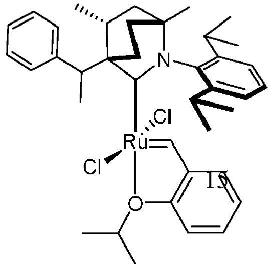 **BiCAAC-Ru-3** was prepared according to the general procedure for the complexes synthesis using **BiCAAC-3** (22 mg, 0.045 mmol, 2 equiv), KHMDS (90 µL, 0.045 mmol, 2 equiv) and HG1 (13.6 mg, 0.0226 mmol, 1 equiv). The mixture was stirred at 40°C. The desired product was obtained as a green solid (mg, yield, diastereoisomer mixture ratio 2:1).
**¹H NMR (400 MHz, *CDCl₃*), major diastereoisomer:** d (ppm) 16.55 (s, 1H), 7.59-7.64 (m, 1H), 7.51-7.54 (m, 3H), 7.47 (d, *J* = 8.0 Hz, 1H), 7.44 (d, *J* = 8.0 Hz, 1H), 7.38 (t, *J* = 7.0 Hz, 2H), 7.30-7.34 (m, 1H), 7.05-7.09 (m, 1H), 6.92 (d, *J* = 8.0 Hz, 1H), 6.83-6.86 (m, 1H), 5.12 (sept, *J* = 6.0 Hz, 1H), 3.17 (sept, *J* = 6.5 Hz, 1H), 2.88 (sept, *J* = 6.5 Hz, 1H), 2.39-2.45 (m, 1H), 2.28-2.35 (m, 1H), 2.16-2.20 (m, 1H), 2.07-2.10 (m, 2H), 1.81-1.84 (m, 3H), 1.79-1.81 (m, 6H), 1.68 (d, *J* = 6.0 Hz, 3H), 1.56 (d, *J* = 6.5 Hz, 3H), 1.29 (d, *J* = 6.0 Hz, 3H), 1.28 (d, *J* = 6.5 Hz, 3H), 1.24 (d, *J* = 6.0 Hz, 3H), 0.92 (s, 3H), 0.88 (d, *J* = 6.5 Hz, 3H), 0.71 (d, *J* = 6.0 Hz, 3H)
**¹³C NMR (101 MHz, *CDCl₃*), major diastereoisomer:** d (ppm) 264.7, 153.0, 147.3, 147.3, 144.2, 142.5, 137.8, 131.6, 131.4, 129.6, 128.5, 126.8, 125.8, 125.7, 124.3, 122.3, 113.5, 75.0, 66.8, 60.4, 44.2, 35.9, 35.5, 35.3, 33.7, 32.8, 29.9, 27.9, 27.8, 27.6, 27.5, 26.1, 25.7, 24.8, 24.7, 24.5, 24.0, 22.3, 22.3, 21.9, 21.8.

**BiCAAC (Me/Me** - **dipp)-Ru Grela type complex (BiCAAC-Ru-4)** 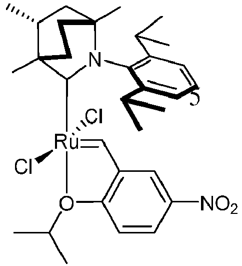 **BiCAAC-Ru-4** was prepared according to the general procedure for the complexes synthesis using **BiCAAC-1** (48 mg, 0.12 mmol, 2 equiv), KHMDS (248 µL, 0.12 mmol, 2 equiv) and HG1 (40 mg, 0.062 mmol, 1 equiv). The mixture was stirred 30 min. The desired product was obtained as a green solid (9.7 mg, 90% purity, 21 % yield).

### Enantioresolution of Ru based complexes

### Example 1: BiCAAC (Me/Me - dipp)-Ru Hoveyda type complex (BiCAAC-Ru-1)

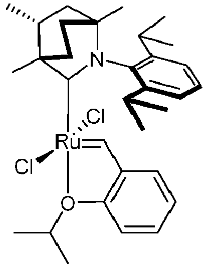

Analytical chiral HPLC separation: Chiralpak IE column with a UV and CD detector at I = 254 nm; flow rate 1 mL/min; eluent: heptane / EtOH / DCM 60/20/20; 1^{st} enantiomer **(+)-BiCAAC-Ru-1:** Rt = 4.32 min and 2^{nd} enantiomer **(-)-BiCAAC-Ru-1:** Rt = 5.57 min.

Semi-preparative separation: The preparative chiral HPLC separation was done on a Chiralpak IE column (250 x 10 mm, 5 µm) with heptane / EtOH / dichloromethane (60/20/20) as mobile phase, flow-rate = 5 mL/min, UV detection at 254 nm with multiple injections (28 times 300 µL, every 3.7 min). From 64 mg of racemic mixture dissolved in 8.5 mL of DCM/Hexanes (65/35), 28 mg of the first eluted enantiomer with ee > 99.5 % **((+)-BiCAAC-Ru-1:** 44% yield) and 30 mg of the second eluted enantiomer with ee > 99.5 % **((-)-BiCAAC-Ru-1:** 47% yield) were obtained.

### Optical rotations

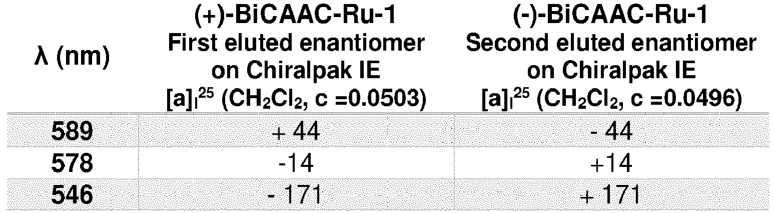

## Claims

1. A ruthenium complex having the following formula (I): 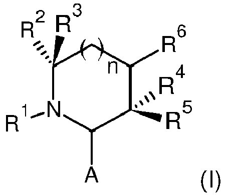 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
said alkyl group being optionally substituted with at least one substituent chosen from the (C₆-C₁₀)aryl groups, and
said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl,
optionally substituted with one or several substituents, in particular selected in the group consisting of: (C₁-C₆)alkylamino, di(C₁-C₆)alkylamino, (C₁-C₆)alcoxy,
and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
with the proviso that R⁵ is different from R⁴;
or R⁴ and R⁵, taken together with the carbon atom to which they are attached, form a five-, six-, or ten-membered cycloalkyl or heterocyclyl ring;
- R⁶ is H or a (C₁-C₆)alkyl group;
- n is an integer comprised between 1 and 3, and is preferably 1;
or R³ and R⁵, taken together with the carbon atom to which they are attached, form a six-, seven- or eight-membered cycloalkyl ring;
- A is either a group of formula (1) or a group of formula (2): 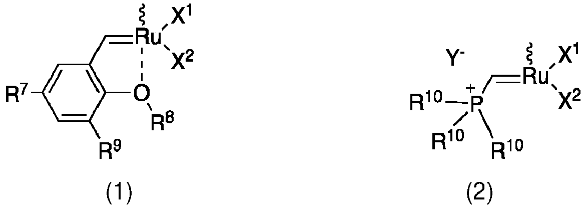 wherein:
- X¹ is an halogen atom, a (C₁-C₆)alkoxy group or a -S-(C₆-C₁₀)aryl group;
- X² is an halogen atom or a (C₁-C₆)alkoxy group;
or X¹ and X² may form together with the ruthenium atom carrying them a heterocycloalkyl group fused with a phenyl group, said phenyl group being possibly substituted with at least one halogen atom,
- R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl, arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
Rₐ and R_{b} being independently selected from H and (C₁-C₆)alkyl,
R and R' being selected from the following groups: (C₁-C₆)alkyl, (C₆-C₁₀)aryl, heteroaryl, and halo(C₁-C₆)alkyl,
R_{c} being H or being selected from the following groups: (C₁-C₆)alkyl, (C₆-C₁₀)aryl, and heteroaryl,
R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
- R⁸ is a (C₁-C₆)alkyl group;
- R¹⁰ is a (C₁-C₆)alkyl group; and
- R⁹ is H, a (C₆-C₁₀)aryl group or a (C₁-C₆)alkyl group;
- Y⁻ is a non-coordinating inorganic anion, and is preferably PF₆⁻, SbF₆⁻ or BF₄⁻,
said complex being in the form of a racemic mixture, or in the form of an optically pure (+) or (-) enantiomer.

2. An optically pure (+) or (-) enantiomer of a ruthenium complex according to claim 1, having the following formula (I): 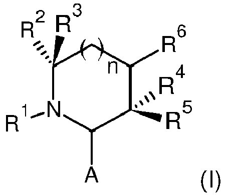 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
said alkyl group being optionally substituted with at least one substituent chosen from the (C₆-C₁₀)aryl groups, and
said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
with the proviso that R⁵ is different from R⁴;
or R⁴ and R⁵, taken together with the carbon atom to which they are attached, form a five-, six-, or ten-membered cycloalkyl or heterocyclyl ring;
- R⁶ is H or a (C₁-C₆)alkyl group;
- n is an integer comprised between 1 and 3, and is preferably 1;
or R³ and R⁵, taken together with the carbon atom to which they are attached, form a six-, seven- or eight-membered cycloalkyl ring;
- A is either a group of formula (1) or a group of formula (2): 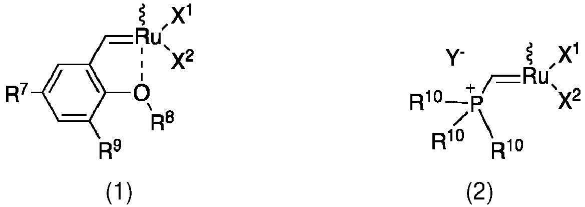
wherein:
- X¹ is an halogen atom, a (C₁-C₆)alkoxy group or a -S-(C₆-C₁₀)aryl group;
- X² is an halogen atom or a (C₁-C₆)alkoxy group;
or X¹ and X² may form together with the ruthenium atom carrying them a heterocycloalkyl group fused with a phenyl group, said phenyl group being possibly substituted with at least one halogen atom,
- R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl,
arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
Rₐ and R_{b} being independently selected from H and (C₁-C₆)alkyl,
R and R' being selected from the following groups: (C₁-C₆)alkyl,(C₆-C₁₀)aryl, heteroaryl, and halo(C₁-C₆)alkyl,
R_{c} being H or being selected from the following groups: (C₁-C₆)alkyl,(C₆-C₁₀)aryl, and heteroaryl,
R_{d} being H or selected from the following groups: (C₁-C₆)alkyl,halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
- R⁸ is a (C₁-C₆)alkyl group;
- R¹⁰ is a (C₁-C₆)alkyl group; and
- R⁹ is H, a (C₆-C₁₀)aryl group or a (C₁-C₆)alkyl group; and
- Y⁻ is a non-coordinating inorganic anion, and is preferably PF₆⁻, SbF₆⁻ or BF₄⁻.

3. An optically pure (+) or (-) enantiomer of a ruthenium complex according to claim 1, having the following formula (II): 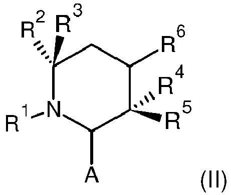 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R⁴ is selected from the following groups: (C₆-C₂₀)aryl, (C₁-C₁₀)alkyl, and (C₃-C₁₂)cycloalkyl group,
said alkyl group being optionally substituted with at least one substituent chosen from the (C₆-C₁₀)aryl groups, and
said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁶ is H or a (C₁-C₆)alkyl group;
- R³ and R⁵, taken together with the carbon atom to which they are attached, form a six-, or seven- or eight-membered cycloalkyl ring;
- A is either a group of formula (1) or a group of formula (2): 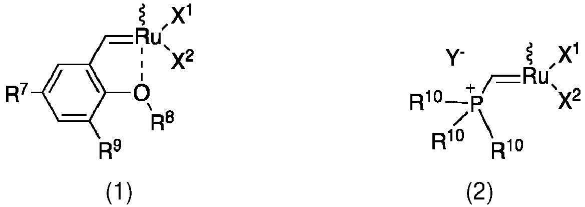
wherein:
- X¹ is an halogen atom, a (C₁-C₆)alkoxy group or a -S-(C₆-C₁₀)aryl group;
- X² is an halogen atom or a (C₁-C₆)alkoxy group;
or X¹ and X² may form together with the ruthenium atom carrying them a heterocycloalkyl group fused with a phenyl group, said phenyl group being possibly substituted with at least one halogen atom,
- R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl,
arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
Rₐ and R_{b} being independently selected from H and (C₁-C₆)alkyl,
R and R' being selected from the following groups: (C₁-C₆)alkyl, (C₆-C₁₀)aryl, heteroaryl, and halo(C₁-C₆)alkyl,
R_{c} being H or being selected from the following groups: (C₁-C₆)alkyl, (C₆-C₁₀)aryl, and heteroaryl,
R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
- R⁸ is a (C₁-C₆)alkyl group;
- R¹⁰ is a (C₁-C₆)alkyl group; and
- R⁹ is H, a (C₆-C₁₀)aryl group or a (C₁-C₆)alkyl group; and
- Y⁻ is a non-coordinating inorganic anion, and is preferably PF₆⁻, SbF₆⁻ or BF₄⁻.

4. An optically pure (+) or (-) enantiomer of a ruthenium complex according to claim 1, having the following formula (III): 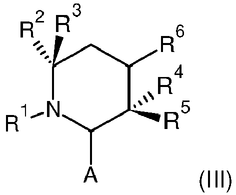 wherein:
- R¹ is a (C₆-C₁₄)aryl group, a (C₁-C₆)alkyl group or a (C₈-C₂₀)cycloalkyl group, said aryl group being optionally substituted with at least one substituent chosen from the group consisting of: halogen, (C₆-C₁₀)aryl group, and (C₁-C₆)alkyl group, said alkyl group being optionally substituted with one or several phenyl group(s);
- R² is H, a (C₆-C₁₀)aryl group or a (C₁-C₆)alkyl group;
- R³ is a (C₁-C₆)alkyl group; or R² and R³ may together form, with the carbon atom carrying them, a (C₃-C₆)cycloalkyl;
- R⁴ is selected from the following groups: (C₆-C₂₀)aryl, (C₁-C₁₀)alkyl, and (C₃-C₁₂)cycloalkyl group,
said alkyl group being optionally substituted with at least one substituent chosen from the (C₆-C₁₀)aryl groups, and
said aryl group being optionally substituted with at least one substituent chosen from the group consisting of: (C₁-C₆)alkyl,optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
- R⁵ is selected from the following groups: (C₆-C₂₀)aryl, (C₁-C₁₀)alkyl, (C₃-C₁₂)cycloalkyl, heteroaryl, (C₆-C₁₀)aryl(C₁-C₆)alkyl, and heteroaryl(C₁-C₆)alkyl, said aryl group being optionally substituted with at least one substituent chosen from the group consisting of: (C₁-C₆)alkyl, optionally substituted with one or several phenyl group(s), (C₆-C₁₀)aryl(C₁-C₆)alkyl, and (C₆-C₁₀)aryl, optionally substituted with one or several substituents, in particular selected in the group consisting of: (C₁-C₆)alkylamino, di(C₁-C₆)alkylamino, (C₁-C₆)alcoxy, and (C₁-C₆)alkyl;
with the proviso that R⁵ is different from R⁴;
- R⁶ is H or a (C₁-C₆)alkyl group;
- A is either a group of formula (1) or a group of formula (2): 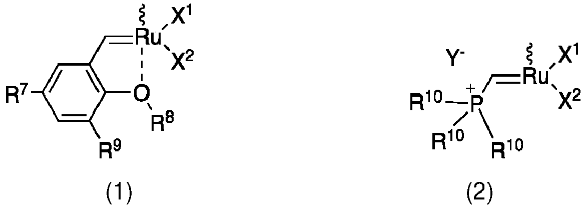 wherein:
- X¹ is an halogen atom, a (C₁-C₆)alkoxy group or a -S-(C₆-C₁₀)aryl group;
- X² is an halogen atom or a (C₁-C₆)alkoxy group;
or X¹ and X² may form together with the ruthenium atom carrying them a heterocycloalkyl group fused with a phenyl group, said phenyl group being possibly substituted with at least one halogen atom,
- R⁷ is H or is selected from the following groups: nitro, cyano, (C₁-C₆)alkyl, cycloalkyl, (C₁-C₆)alkoxy, cycloalkyloxy, (C₆-C₁₀)aryl, heteroaryl, (C₆-C₁₀)aryloxy, heteroaryloxy, (C₁-C₆)alkylcarbonyl, arylcarbonyl, (C₁-C₆)alkoxycarbonyl, aryloxycarbonyl, carboxyl, amido, (C₁-C₆)alkylsulfonyl,
arylsulfonyl, (C₁-C₆)alkylsulfinyl, arylsulfinyl, (C₁-C₆)alkylthio, arylthio, sulfonamide, halogen, -NRₐR_{b}, -SO₂-NRR', and -N(R_{c})-C(=O)-R_{c},
Rₐ and R_{b} being independently selected from H and (C₁-C₆)alkyl,
R and R' being selected from the following groups: (C₁-C₆)alkyl,(C₆-C₁₀)aryl, heteroaryl, and halo(C₁-C₆)alkyl,
R_{c} being H or being selected from the following groups: (C₁-C₆)alkyl, (C₆-C₁₀)aryl, and heteroaryl,
R_{d} being H or selected from the following groups: (C₁-C₆)alkyl, halo(C₁-C₆)alkyl, cycloalkyl, (C₆-C₁₀)aryl, heteroaryl, (C₁-C₆)alkoxy, cycloalkyloxy, (C₆-C₁₀)aryloxy, and heteroaryloxy;
- R⁸ is a (C₁-C₆)alkyl group;
- R¹⁰ is a (C₁-C₆)alkyl group; and
- R⁹ is H, a (C₆-C₁₀)aryl group or a (C₁-C₆)alkyl group; and
- Y⁻ is a non-coordinating inorganic anion, and is preferably PF₆⁻, SbF₆⁻ or BF₄⁻.

5. The enantiomer of any one of claims 2 to 4, having the following formula (IV): 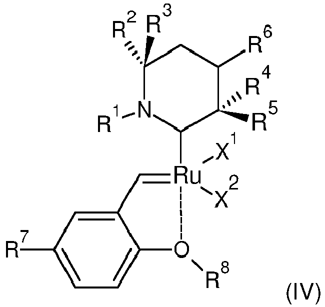 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from group consisting of (C₁-C₆)alkyl;
- R² is a (C₆-C₁₀)aryl group or a (C₁-C₆)alkyl group;
- R³ is a (C₁-C₆)alkyl group;
- R⁴ is a (C₆-C₁₀)aryl group, a (C₁-C₆)alkyl group or a (C₃-C₆)cycloalkyl group, said alkyl group being optionally substituted with at least one substituent chosen from the (C₆-C₁₀)aryl groups, such as phenyl, and said aryl group being optionally substituted with at least one substituent chosen from the (C₁-C₆)alkyl groups;
- R⁵ is selected from the following groups: (C₆-C₁₀)aryl, (C₁-C₆)alkyl, (C₃-C₆)cycloalkyl, heteroaryl, (C₆-C₁₀)aryl(C₁-C₆)alkyl, and heteroaryl(C₁-C₆)alkyl, said aryl group being optionally substituted with at least one substituent chosen from group consisting of (C₁-C₆)alkyl;
with the proviso that R⁵ is different from R⁴;
- R⁶ is H or a (C₁-C₆)alkyl group;
or R³ and R⁵, taken together with the carbon atom to which they are attached, form a six-membered cycloalkyl ring;
- R⁷ is H, nitro or a (C₁-C₆)alkyl group; and
- R⁸ is a (C₁-C₆)alkyl group.

6. The enantiomer of claim 5, having the following formula (V): 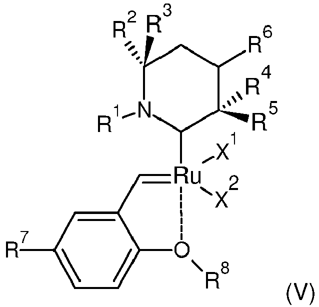 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from the (C₁-C₆)alkyl groups;
- R² is a (C₆-C₁₀)aryl group or a (C₁-C₆)alkyl group;
- R³ is a (C₁-C₆)alkyl group;
- R⁴ is a (C₆-C₁₀)aryl group, a (C₁-C₆)alkyl group or a (C₃-C₆)cycloalkyl group, said aryl group being optionally substituted with at least one substituent chosen from group consisting of (C₁-C₆)alkyl;
- R⁵ is selected from the following groups: (C₆-C₁₀)aryl, (C₁-C₆)alkyl, (C₃-C₆)cycloalkyl, heteroaryl, (C₆-C₁₀)aryl(C₁-C₆)alkyl, and heteroaryl(C₁-C₆)alkyl, said aryl group being optionally substituted with at least one substituent chosen from group consisting of (C₁-C₆)alkyl;
with the proviso that R⁵ is different from R⁴;
- R⁶ is H or a (C₁-C₆)alkyl group;
- R⁷ is H, nitro or a (C₁-C₆)alkyl group; and
- R⁸ is a (C₁-C₆)alkyl group.

7. The enantiomer of claim 5, having the following formula (VI): 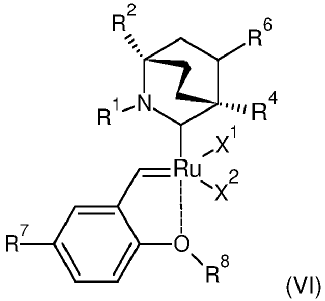 wherein:
- X¹ is an halogen atom or a (C₁-C₆)alkoxy group;
- X² is an halogen atom or a (C₁-C₆)alkoxy group;
- R¹ is a (C₆-C₁₀)aryl group or a (C₁-C₆)alkyl group, said aryl group being optionally substituted with at least one substituent chosen from group consisting of (C₁-C₆)alkyl;
- R² is a (C₆-C₁₀)aryl group or a (C₁-C₆)alkyl group;
- R⁴ is a (C₆-C₁₀)aryl group, a (C₁-C₆)alkyl group or a (C₃-C₆)cycloalkyl group, said alkyl group being optionally substituted with at least one substituent chosen from the (C₆-C₁₀)aryl group, preferably phenyl, and said aryl group being optionally substituted with at least one substituent chosen from the (C₁-C₆)alkyl groups;
- R⁶ is H or a (C₁-C₆)alkyl group;
- R⁷ is H, nitro or a (C₁-C₆)alkyl group; and
- R⁸ is a (C₁-C₆)alkyl group.

8. The enantiomer of any one of claims 5 to 7, wherein X₁ and X₂ are halogen atoms, preferably Cl.

9. The enantiomer of any one of claims 5 to 8, wherein R¹ is a (C₆-C₁₀)aryl group substituted with at least one substituent chosen from the (C₁-C₆)alkyl groups, preferably a phenyl group substituted with two alkyl groups, such as isopropyl or ethyl groups, and/or wherein R² is a (C₁-C₆)alkyl group.

10. The enantiomer of any one of claims 5, 6, 8 and 9, wherein R² and R³ are identical, and are preferably a methyl group.

11. The enantiomer of any one of claims 5, 6, and 8 to 10, wherein R⁴ and R⁵ are different and selected from the following groups: (C₆-C₁₀)aryl such as phenyl or naphthyl, (C₁-C₆)alkyl such as methyl, and (C₃-C₆)cycloalkyl such as cyclohexyl, said aryl group being optionally substituted with two substituents selected from the (C₁-C₆)alkyl groups.

12. The enantiomer of any one of claims 5 to 12, wherein R⁷ is H or nitro.

13. The enantiomer of any one of claims 2 to 13, having one of the following formulae:

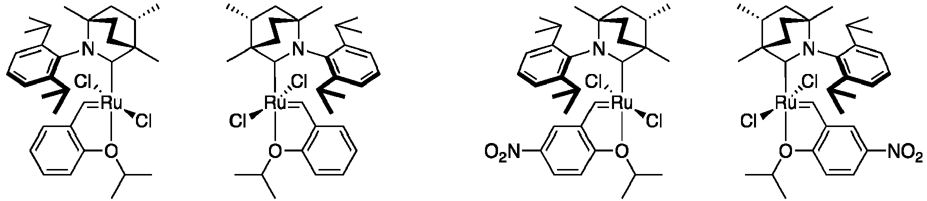

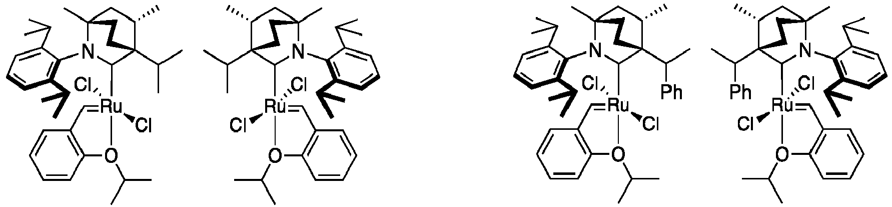

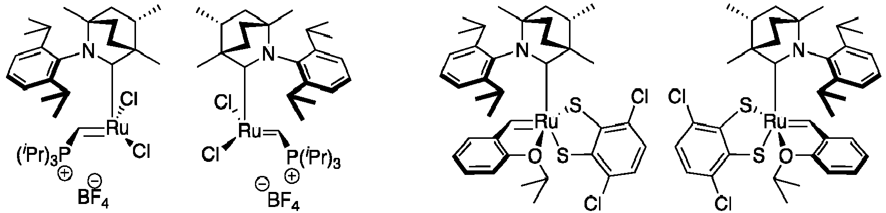

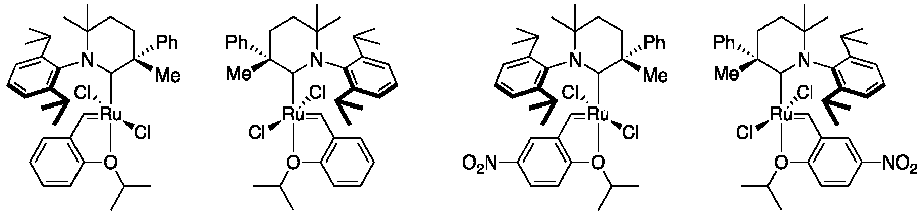

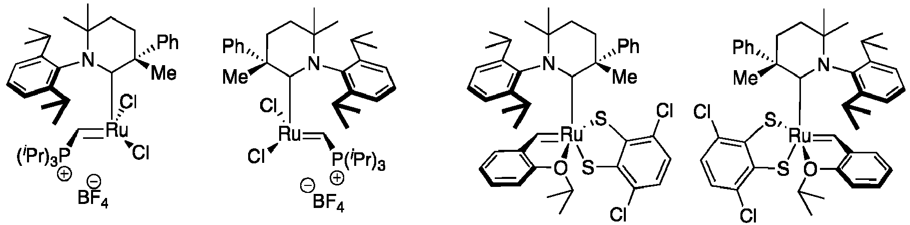

14. The use of the complex or enantiomer of any one of claims 1 to 13 as a catalyst, preferably as a catalyst in asymmetric olefin metathesis.

15. A process for the preparation of the enantiomer of any one of claims 2 to 13, comprising a step of chiral HPLC separation of racemic ruthenium complexes of formula (I).
